Europäisches Patentamt

European Patent Office

Office européen des brevets

(11) Numéro de publication : **0 311 479 B1**

# FASCICULE DE BREVET EUROPEEN

(45) Date de publication du fascicule du brevet :
**29.01.92 Bulletin 92/05**

(51) Int. Cl.⁵ : **A47B 96/14,** A47B 57/20, F16B 12/06

(21) Numéro de dépôt : **88402413.4**

(22) Date de dépôt : **23.09.88**

(54) **Assemblage d'éléments profilés perforés pour la construction de rayonnages et de meubles, et élément profilé perforé, tablette à bords tombants et gousset pour la réalisation d'un tel assemblage.**

(30) Priorité : **23.09.87 FR 8713158**

(43) Date de publication de la demande :
**12.04.89 Bulletin 89/15**

(45) Mention de la délivrance du brevet :
**29.01.92 Bulletin 92/05**

(84) Etats contractants désignés :
**AT BE CH DE ES GB IT LI NL SE**

(56) Documents cités :
**FR-A- 1 444 652**
**GB-A- 983 455**
**US-A- 2 863 683**

(73) Titulaire : **RAMBLIER, Yves**
**98, rue Saint-Charles**
**F-75015 Paris (FR)**

(72) Inventeur : **RAMBLIER, Yves**
**98, rue Saint-Charles**
**F-75015 Paris (FR)**

(74) Mandataire : **DEGRET, Jacques**
**Cabinet Degret 24, place du Général Catroux**
**F-75017 Paris (FR)**

Jouve, 18, rue Saint-Denis, 75001 PARIS

## Description

La présente invention se rapporte aux assemblages d'éléments profilés perforés pour la construction de rayonnages et de meubles, notamment métalliques. Bien évidemment, elle concerne aussi tous les composants de ces assemblages, notamment les éléments profilés perforés, plats, en L ou en U, les tablettes à bords tombants perforés ainsi que les goussets permettant la réunion au moins par paire des éléments profilés perforés précités, et la réunion d'au moins un de ces éléments profilés avec une tablette à bords tombants perforés.

L'invention se propose de fournir des assemblages dont la construction est simple et rapide. Elle appartient en conséquence au domaine des assemblages métalliques d'éléments perforés réunis au moyen de goussets et de pièces de blocage desdits goussets relativement aux profilés, qui excluent l'emploi de vis, de boulons et d'écrous dont on sait qu'il est : complexe (il requiert des réglages délicats en vue d'obtenir l'orthogonalité parfaite des éléments) ; lent (il faut environ une minute et demie pour poser et serrer un boulon) ; et incertain quant à la solidité de l'assemblage réalisé (risques de fêlure des organes de fixation, notamment des tiges de boulon, à proximité de leur tête en cas de serrage excessif des écrous).

A titre d'exemple quant au temps nécessaire pour construire une structure parallélépipédique stable à huit angles, on sait que, selon la technique traditionnelle utilisant des boulons, il faut quarante-huit organes de fixation ce qui correspond à un temps de pose de l'ordre de une heure douze minutes. Selon l'invention, la même construction pourra être réalisée en dix minutes, avec au surplus une garantie d'une parfaite orthogonalité dans les trois dimensions alors que cette orthogonalité est relativement instable dans la technique antérieure employant les boulons.

La présente invention a donc pour premier objet un assemblage d'éléments profilés perforés, pour la construction de rayonnages et de meubles, notamment métalliques, ledit assemblage étant du type constitué d'éléments profilés perforés exclusivement ou du type constitué de tels éléments associés à des tablettes à bords tombants, et au moins certains des éléments profilés dudit assemblage étant réunis, entre eux et/ou avec une tablette, au moins par paire à l'aide de goussets, lesdits éléments profilés et les bords des tablettes étant du genre de ceux dont au moins une aile comporte une ligne de perforations qui s'étend selon sensiblement l'axe médian longitudinal de ladite aile et qui présente en alternance une perforation dite longitudinale, qui s'étend parallèlement à l'axe médian longitudinal, et une perforation dite transversale, qui s'étend perpendiculairement à l'axe médian longitudinal, lesdites perforations étant disposées selon un pas constant, et lesdits goussets étant chacun constitués par un fer plat allongé présentant à chacune de ses deux extrémités des moyens pour sa fixation sur au moins un élément profilé (ou une tablette), lesdits moyens comportant des saillies qui coopèrent avec les perforations de l'élément profilé (ou de la tablette), ledit assemblage étant caractérisé en ce que chaque gousset comporte au moins à une extrémité un ensemble de trois saillies alignées, à savoir deux ergots latéraux, qui coopèrent avec deux perforations transversales, et une patte centrale, qui est disposée perpendiculairement aux ergots et qui coopère avec une perforation longitudinale, lesdits deux ergots et ladite patte s'étendant sensiblement perpendiculairement au plat du gousset, du même côté par rapport au plat, et traversant la perforation avec laquelle, respectivement, ils coopèrent, et en ce que ladite patte est assortie de moyens, pour son blocage relativement à l'élément profilé (ou à la tablette), qui coopèrent avec la partie de la patte dépassant l'élément profilé (ou la tablette).

La fixation des goussets sur les profilés et/ou les tablettes que lesdits goussets doivent assembler s'obtenant sans boulon, ni vis, ni écrou, la construction est réalisée facilement et rapidement, en quelques minutes. De plus, les risques de fêlure des organes de fixation disparaissent, puisqu'il n'y a pas de serrage d'écrous sur des tiges de boulons. En outre, le désaccouplement des éléments profilés (et éventuellement des tablettes) en vue du démontage du rayonnage ou du meuble réalisé est tout aussi simple et rapide, et tous les composants utilisés pour l'assemblage (éléments profilés, goussets et leurs moyens de blocage, tablettes éventuelles) peuvent être réutilisés sans dommage puisque aucun d'entre eux n'a subi de contraintes pouvant affaiblir ses résistances mécaniques.

Dans une première variante de réalisation, l'une au moins des pattes centrales d'au moins un gousset est percée d'une lumière dont le bord supérieur est situé au-dessus de l'aile de l'élément profilé (ou au-dessus du bord tombant de la tablette) et les moyens de blocage de la patte relativement à l'élément profilé sont formés d'une lame, de préférence courbe et élastiquement déformable, qui traverse la lumière, perpendiculairement à la direction générale de l'élément profilé, et dont les deux extrémités s'appuient sur l'aile de l'élément profilé.

Dans une deuxième variante de réalisation, l'une au moins des pattes centrales d'au moins un gousset est percée d'une lumière dont le bord supérieur est situé au-dessus de l'aile de l'élément profilé (ou au-dessus du bord tombant de la tablette) et les moyens de blocage de la patte relativement à l'élément profilé sont formés d'une clavette en tôle pliée, à section droite en L, munie d'un orifice percé en son centre sur l'arête du dièdre formé par les deux ailes de la clavette, la hauteur de ladite clavette étant supérieure à la différence de niveau existant entre le bord supérieur de la lumière et l'aile de l'élément profilé, ladite clavette étant encastrée dans la lumière, par déformation élastique provoquant l'écartement de ses ailes, et se bloquant ensuite dans ladite lumière, par rapprochement élastique de ses ailes lorsque son orifice central vient se situer sous le bord supérieur de la lumière.

Dans une troisième variante de réalisation, l'une au moins des pattes centrales d'au moins un gousset présente une base rétrécie sur une hauteur supérieure à l'épaisseur de l'aile de l'élément profilé (ou à l'épaisseur du bord tombant de la tablette) et les moyens de blocage de la patte relativement à l'élément profilé sont formés d'une lame, de préférence courbe et élastiquement déformable, découpée en U, les deux ailes de ce U étant glissées sous le sommet de la patte de sorte à encadrer la base rétrécie, l'âme du U et les extrémités libres des ailes du U s'appuyant sur l'aile de l'élément profilé.

Selon une quatrième variante, l'une au moins des pattes centrales d'au moins un gousset présente une base rétrécie sur une hauteur très légèrement supérieure à l'épaisseur de l'aile de l'élément profilé (ou à l'épaisseur du bord tombant de la tablette) et au moins une et de préférence les deux parties du sommet de cette patte en débord par rapport à l'élément profilé et par rapport à la base rétrécie sont courbées en sorte que le sommet de ladite patte a la forme d'un J ou d'un S dont l'extrémité libre, ou respectivement les deux extrémités, s'appuie(nt) sur l'aile de l'élément profilé.

Cette quatrième réalisation peut éventuellement constituer la seule exception à la possibilité de réemploi, en vue de la construction d'un nouveau meuble, de certains des composants déjà employés pour un meuble qui a été démonté ; dans certains cas, le sommet de la patte du gousset qui aura été courbé en forme de J ou en forme de S pour assembler ledit gousset à un élément profilé perforé cassera à la déformation inverse en vue du démontage ou, plus tard, à la formation d'une nouvelle courbure en J ou en S pour la seconde fixation du gousset sur un autre élément profilé perforé.

Avantageusement, les deux extrémités du gousset comportent chacune un ensemble de trois saillies alignées, à savoir deux ergots latéraux et une patte centrale, et lesdites deux extrémités sont perpendiculaires entre elles, l'âme du gousset plat s'étendant alors entre ces deux extrémités selon une direction inclinée à 45° par rapport à chacune desdites extrémités. Un tel gousset est surtout utilisé pour l'assemblage orthogonal de deux éléments profilés perforés, notamment d'un longeron et d'une traverse, et éventuellement il peut aussi soutenir un plateau en bois.

Selon une autre construction de gousset, dans laquelle les deux extrémités sont parallèles, ledit gousset comporte un seul ensemble de trois saillies alignées selon une direction perpendiculaire auxdites extrémités, un ergot latéral dudit ensemble étant placé à proximité immédiate d'une extrémité du gousset. Un tel gousset est essentiellement utilisé pour la réunion de deux profilés, orthogonalement l'un à l'autre, dans un angle de la structure ainsi que pour la réunion d'un profilé perforé avec une tablette.

Selon une troisième construction de gousset, celui-ci est constitué par un fer plat allongé comportant, alignés selon sensiblement son axe médian longitudinal, deux ensembles formés chacun de deux ergots transversaux et d'une patte longitudinale et destinés chacun à être fixés en bout d'un élément profilé. Un tel gousset est alors utilisé pour l'aboutement de deux éléments profilés, notamment de deux profilés à section droite en U destinés à former un chemin de câbles.

Dans sa définition préférentielle, la patte du gousset, à chaque extrémité dudit gousset, est exactement centrée entre les deux ergots latéraux. Dans ce cas, le pas selon lequel sont disposées les perforations est égal à la largeur de l'aile de l'élément profilé (ou de l'aile de la tablette) dans laquelle sont prévues lesdites perforations et la ligne de ces perforations s'étend selon l'axe médian longitudinal de ladite aile. Avantageusement, dans la partie située entre la patte centrale et chaque ergot, le plat du gousset peut comporter un prolongement qui déborde largement les ergots et la patte de façon à constituer un appui supplémentaire du plat du gousset contre l'aile de l'élément profilé au-delà des perforations transversales.

De telles définitions permettent des constructions d'assemblage dans lesquelles les profilés sont bord à bord, ce qui constitue un gain de matière important. En outre, l'esthétique de tels assemblages est amélioré car tous les profilés sont exactement au même niveau. Enfin, puisque les éléments profilés sont bord à bord, et que ces contacts sont réalisés par les tranches des profilés, les efforts sont mieux répartis en cas de charges importantes, c'est-à-dire que la structure constituée reste stable et indéformable.

La présente invention a pour second objet un composant perforé pour la réalisation de l'assemblage répondant aux caractéristiques précitées, ledit élément profilé étant soit un profilé à section droite en L (cornière) ou en U, soit un profilé plat, soit une tablette à bords tombants.

Dans le cas où le composant perforé est un profilé en L ou en U et du type dont au moins une aile de ce L ou de ce U comporte une ligne de perforations qui s'étend selon sensiblement l'axe médian longitudinal de ladite aile et qui présente en alternance une perforation dite longitudinale, qui s'étend parallèlement à l'axe médian longitudinal, et une perforation dite transversale, qui s'étend perpendiculairement à l'axe médian longitudinal, lesdites perforations étant disposées selon un pas constant, ledit composant est caractérisé en ce que le pas selon lequel sont disposées les perforations est égal à la largeur de l'aile de l'élément profilé dans laquelle sont prévues lesdites perforations et la ligne de ces perforations s'étend selon l'axe médian longitudinal de ladite aile. L'assemblage est alors simplifié, à savoir que pour une construction d'éléments perforés déterminé, dont le pas et la largeur des ailes sont connus, une seule construction parallèle de goussets suffit et l'emploi de ces goussets garantit en toute circonstance des liaisons entre profilés telles que, dans les réalisations d'angles, les profilés seront bord à bord et en contact par leurs tranches.

Préférentiellement, tout élément profilé est alors caractérisé en ce que, le long de chaque ligne de perforations, la distance séparant une perforation longitudinale et une perforation transversale est constante sur toute la longueur de ladite ligne. De préférence également, l'une au moins de ces deux sections d'extrémités est confondue avec l'axe médian transversal d'une perforation longitudinale ou avec l'axe médian transversal d'une perforation transversale.

Dans le cas où le composant perforé est une tablette à bords tombants constituée d'un plateau et de bords tombants pliés à 90°, qui comportent chacun une ligne de perforations qui s'étend selon sensiblement l'axe médian longitudinal desdits bords, ladite tablette est caractérisée en ce que chaque ligne de perforations présente en alternance une perforation dite longitudinale, que s'étend parallèlement à l'axe médian longitudinal, et une perforation dite transversale, qui s'étend perpendiculairement à l'axe médian longitudinal, lesdites perforations étant disposées selon un pas constant.

Si le composant perforé est un profilé, chaque ligne de perforations s'étend avantageusement d'une extrémité à l'autre dudit profilé ; si le composant perforé est une tablette à bords tombants, chaque ligne de perforations est de préférence limitée au strict nécessaire, à savoir trois perforations, et ladite ligne, par rapport à un coin, prend naissance à une distance égale au pas.

La présente invention a pour troisième objet un gousset pour la réalisation d'assemblages répondant aux caractéristiques précitées, par la réunion d'éléments profilés perforés répondant également aux caractéristiques précitées, ledit gousset, constitué par un fer plat allongé, étant caractérisé en ce qu'il comporte, alignés à chacune de ses deux extrémités, deux ergots latéraux et une patte centrale disposée perpendiculairement aux ergots, lesdits deux ergots et ladite patte s'étendant sensiblement perpendiculairement au plat du gousset, du même côté par rapport au plat, ladite patte étant destinée à être assortie de moyens, pour son blocage relativement à l'élément profilé, qui coopèrent avec la partie de la patte dépassant l'élément profilé.

Avantageusement, dans la partie située entre la patte centrale et chaque ergot latéral, le plat du gousset comporte un prolongement qui déborde largement les ergots et la patte de façon à constituer un appui supplémentaire du plat du gousset contre l'aile de l'élément profilé au-delà des perforations transversales.

Dans une variante de réalisation pour l'assemblage, orthogonalement l'un à l'autre, de deux éléments profilés et plus particulièrement de deux éléments profilés destinés à une liaison dans un angle de l'assemblage, et aussi pour l'assemblage d'une tablette à bords tombants et d'un montant profilé perforé, le gousset est constitué par un fer plat allongé, qui présente à l'une de ses deux extrémités deux pattes latérales, pliées à sensiblement 90° et prolongées chacune vers l'avant d'un doigt situé au-dessus du plat et distant dudit plat d'une hauteur égale à l'épaisseur de l'élément profilé, et qui comporte à l'autre de ses deux extrémités, alignés selon sensiblement l'axe médian longitudinal dudit gousset, donc perpendiculairement à ses extrémités, deux ergots transversaux et une patte longitudinale, lesdits deux ergots et ladite patte s'étendant perpendiculairement au plat du gousset, du même côté que les pattes prolongées des doigts.

Pour l'aboutement de deux éléments profilés, et plus particulièrement pour l'aboutement de deux éléments profilés à section droite en U, au niveau de leurs âmes, pour la réalisation d'un chemin de câbles, le gousset est constitué par un fer plat allongé comportant, alignés selon sensiblement son axe médian longitudinal, deux ensembles formés chacun de deux ergots transversaux et d'une patte longitudinale et destinés chacun à être fixés en bout d'un élément profilé. Dans une première variante de réalisation de ce type de gousset, pour chaque ensemble, la patte longitudinale est centrée entre les deux ergots transversaux. En seconde variante, les deux pattes longitudinales du gousset sont situées entre les deux paires d'ergots transversaux appartenant chacun, respectivement, à un ensemble.

Pour mieux faire comprendre les objets de la présente invention, on va en décrire ci-après, à titre d'exemples purement illustratifs et non limitatifs, diverses formes de réalisations en référence aux dessins annexés sur lesquels :

— la figure 1 représente en perspective un angle d'une structure, meuble ou rayonnage, vu de l'extérieur, obtenu par l'assemblage de trois cornières profilées perforées disposées bord à bord et réunies entre elles, par paires, à l'aide de goussets d'un premier type ;

— la figure 2 représente en perspective, vu de l'intérieur, l'angle de la structure de la figure 1 ;

— la figure 3 représente, vue de dessus, une clé permettant de courber les pattes des goussets du premier type, pour bloquer lesdits goussets sur les cornières à assembler ;

— la figure 4 représente en perspective une variante du gousset du premier type, variante dans laquelle les pattes centrales sont chacune percées d'une lumière destinée à coopérer avec, respectivement, une lame courbe et élastiquement déformable, et/ou une clavette en L à bords convergents ;

— la figure 5 représente en perspective une autre variante du gousset du premier type, variante dans laquelle les deux pattes sont déformables selon, respectivement, un J et un S ;

— la figure 6 représente, en perspective, vu de l'extérieur, l'angle d'une structure similaire à celle représentée aux figures 1 et 2, dans laquelle les trois cornières profilées perforées disposées bord à bord sont, pour certaines d'entre elles, réunies à l'aide de goussets d'un second type ;

— la figure 7 représente en perspective, vu de l'intérieur, l'angle de la structure de la figure 6 ;

— la figure 8 représente en perspective le gousset du second type utilisé pour la réalisation de l'assemblage des figures 6 et 7 ;

— la figure 9 représente en perspective une variante du gousset de ce second type, variante dans laquelle la patte centrale est percée d'une lumière destinée à coopérer avec une lame courbe et élastiquement déformable et/ou une clavette en L à bords convergents ;

— la figure 10 représente en perspective l'assemblage d'un montant et d'une tablette à bords tombants ;

— la figure 11 est une vue de côté de l'assemblage de la figure 10 ;

— la figure 12 représente en perspective l'assemblage de deux profilés perforés conformes à l'invention, à section droite en U, pour la réalisation d'un chemin de câbles ;

— les figures 13 et 14 représentent en perspective deux variantes d'un gousset du troisième type permettant l'assemblage des profilés en U aboutés de la figure 12 ; et

— la figure 15 représente en perspective une variante d'assemblage de profilés perforés conformes à l'invention, variante dans laquelle le montant est disposé à l'extérieur de l'ossature et est renforcé en doublant la cornière d'une seconde cornière du même type.

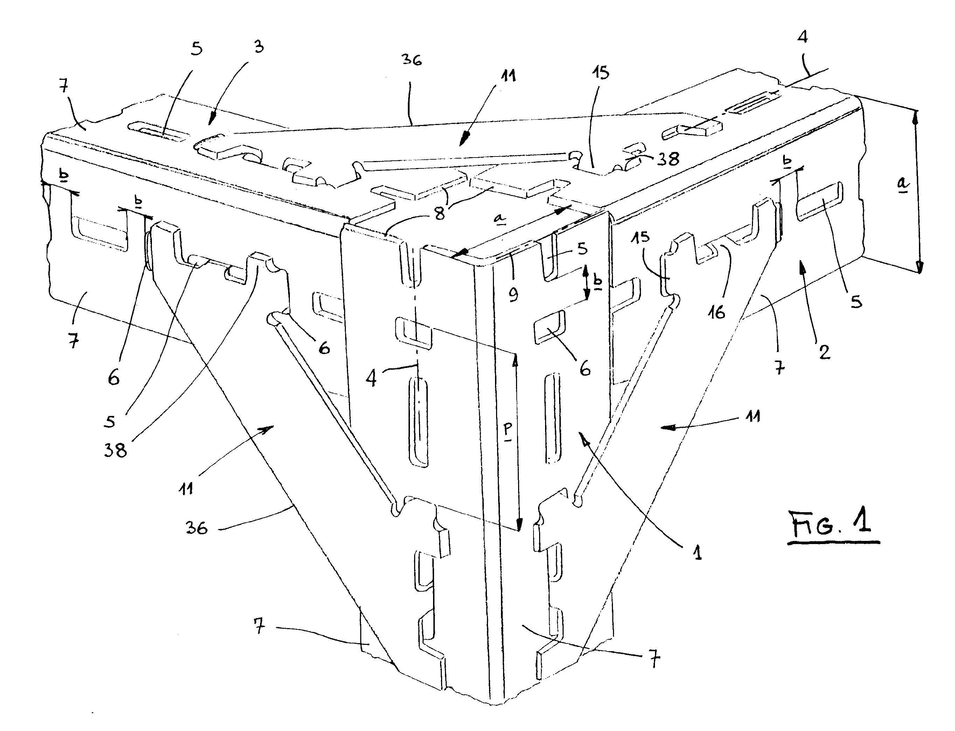

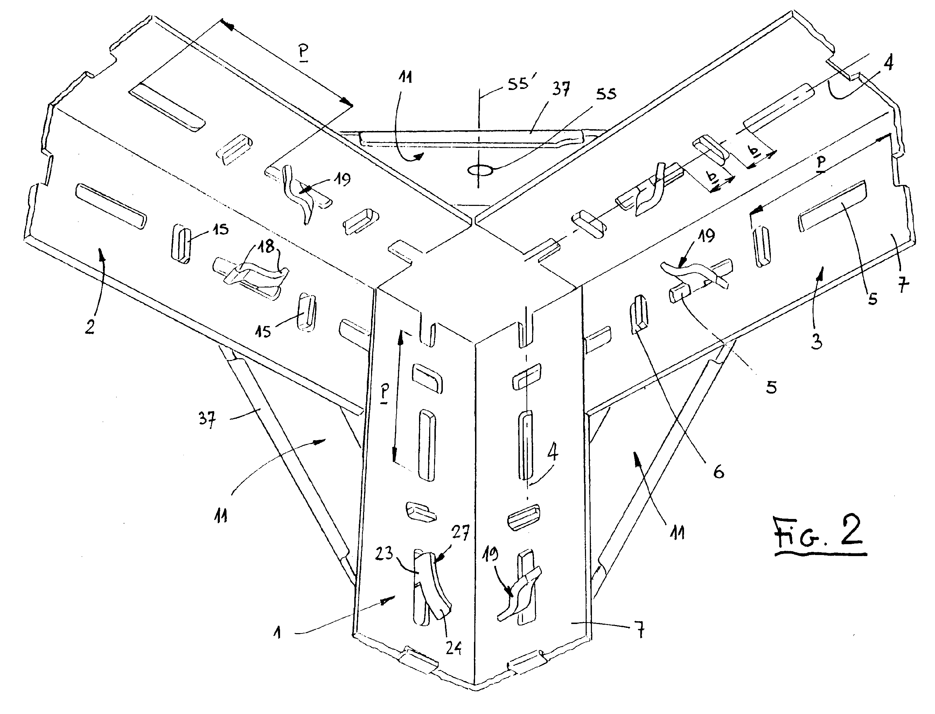

En se référant aux figures 1 et 2, qui représentent en perspective un angle d'un meuble ou d'un rayonnage, vu respectivement de l'extérieur et de l'intérieur, on voit que l'on a désigné par (1) un montant vertical de la structure, par (2) un longeron horizontal et par (3) une traverse horizontale, les trois profilés précités étant des cornières, donc à section droite en L, les deux ailes de chaque cornière comportant chacune une ligne de perforations qui s'étend selon l'axe médian longitudinal (4) de ladite aile.

Dans la description qui va suivre, on attribuera le terme de longerons aux profilés qui, dans une structure rectangulaire horizontale, constituent les deux plus grands côtés, et on attribuera le terme de traverses aux éléments profilés qui, dans cette même structure, constituent les deux petits côtés.

Selon une première caractéristique essentielle, chaque ligne de perforations présente en alternance une perforation (5), dite longitudinale, qui s'étend parallèlement à l'axe (4), et une perforation (6), dite transversale, qui s'étend perpendiculairement audit axe (4).

Les perforations sont avantageusement rectangulaires et, sur chaque ligne (4), elles sont disposées selon un pas (P) constant.

Au surplus, le pas (P) selon lequel sont disposées les perforations (5) et (6) est égal à la largeur hors-tout (a) de chaque aile (7) de tout élément profilé (1, 2) et (3) dans laquelle sont prévues lesdites perforations et de plus, le long de chaque ligne (4), la distance (b) séparant une perforation longitudinale (5) et une perforation transversale (6) est constante sur toute la longueur de ladite ligne.

Pour exemple, pour une cornière dont chaque aile (7) a 40 mm de côté hors-tout, et dont le pas (P) des perforations est par suite de 40 mm, la longueur des perforations longitudinales est de 20 mm, la largeur des perforations transversales est de 5 mm et la distance (b) séparant toute perforation longitudinale d'une perforation transversale est de 7,5 mm. La largeur des perforations longitudinales est de 5 mm et la hauteur des perforations transversales est de 12 mm.

Enfin, par construction, les profilés perforés (1, 2) et (3) sont découpés en atelier et délivrés en sorte que au moins l'une de leurs deux sections d'extrémité (8) soit confondue soit avec l'axe médian transversal (9) d'une perforation longitudinale (5), soit avec l'axe médian transversal (10) d'une perforation transversale (6). Dans l'exemple des figures 1 et 2, les sections d'extrémité des trois profilés sont chacune confondues avec l'axe médian transversal (9) d'une perforation longitudinale (5).

Pour leur assemblage deux à deux, les cornières sont disposées orthogonalement, et "bord à bord", à savoir que la tranche de l'aile verticale du longeron (2), et respectivement la tranche de l'aile verticale de la traverse (3), est en contact avec l'extrémité d'une aile du montant (1) et disposée dans le plan de cette aile, l'aile horizontale du longeron (2) et respectivement l'aile horizontale de la traverse (3) étant dans le même plan que la section d'extrémité du montant (1).

Dans les trois plans orthogonaux ainsi formés, trois goussets (11), inclinés à 45° par rapport à la direction générale des cornières, viennent prendre appui à l'extérieur desdites cornières.

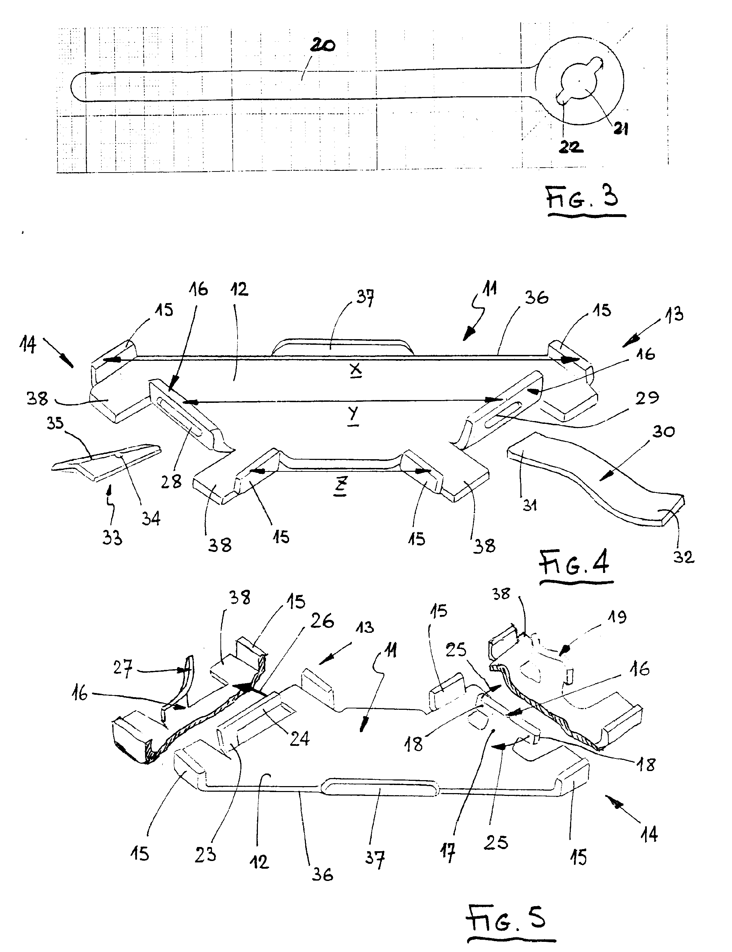

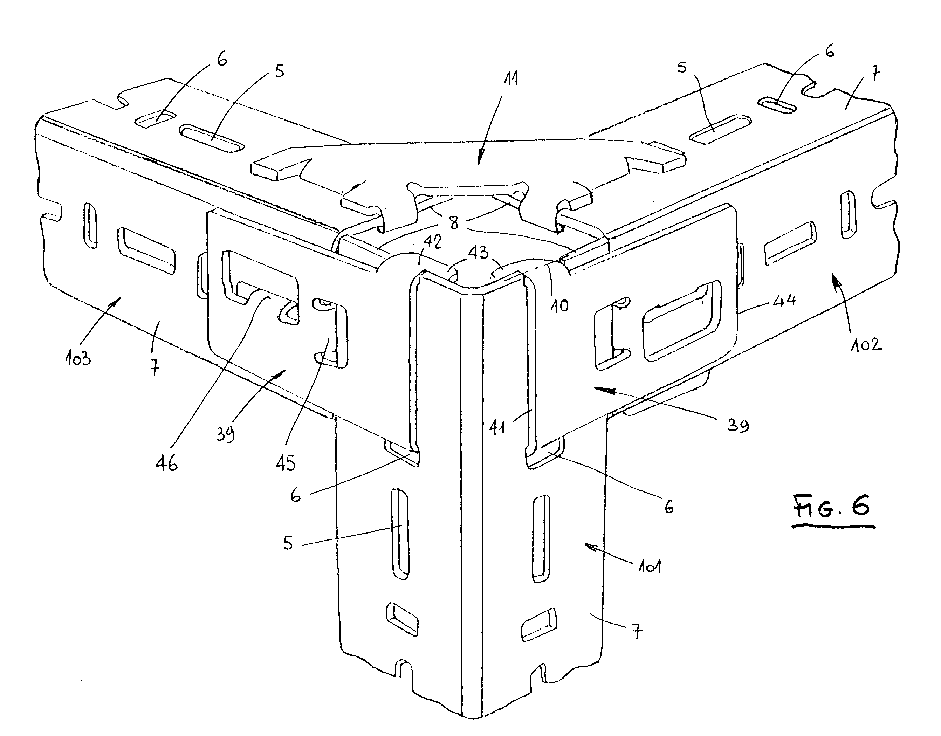

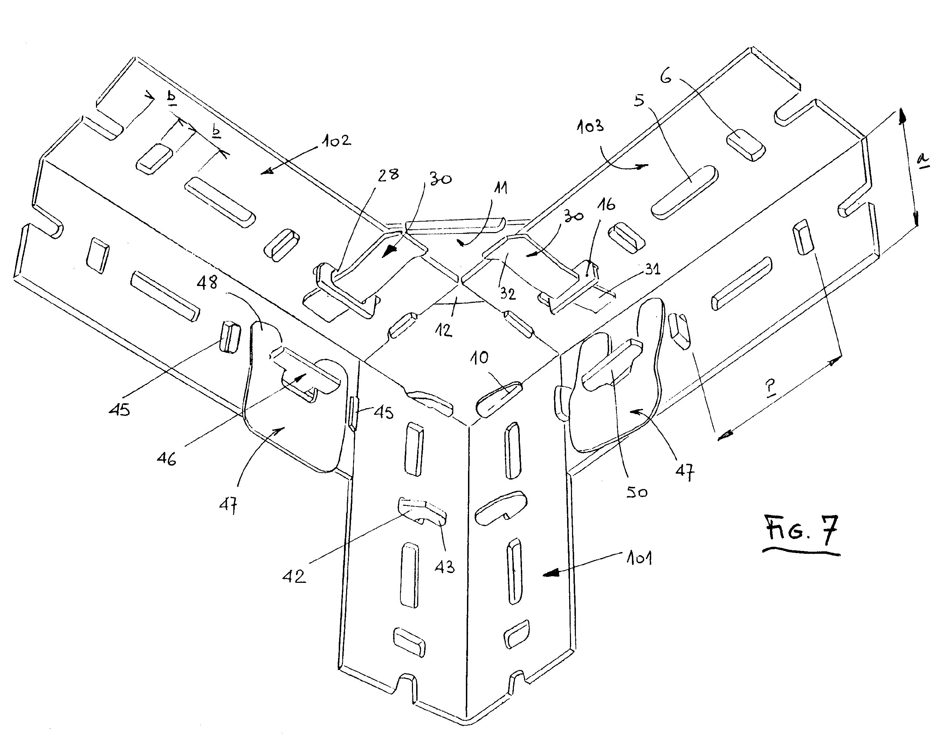

Chacun de ces goussets (11), représenté en détail en perspective à la figure 5, est constitué par un fer plat allongé (12) qui comporte, alignés à chacune de ses deux extrémités, respectivement (13) et (14), deux ergots latéraux (15) et une patte centrale (16) disposée perpendiculairement aux ergots, lesdits deux ergots et ladite patte s'étendant sensiblement perpendiculairement au plat (12), du même côté par rapport audit plat. Les extrémités (13) et (14) sont inclinées à 45° par rapport à la direction générale du plat pour être perpendiculaires l'une à l'autre. En conséquence, sur chaque gousset (11), les deux pattes centrales (16) sont perpendiculaires entre elles et les paires d'ergots (15) s'étendent également selon deux directions générales perpendiculaires entre elles.

Les ergots latéraux (15) sont destinés à coopérer avec deux perforations transversales (6) d'une cornière (1, 2) ou (3) et les pattes centrales (16) sont destinées à coopérer avec les perforations longitudinales (5) des cornières (1, 2) ou (3). Les ergots et les pattes ont donc par construction une hauteur nettement supérieure à l'épaisseur des profilés (1, 2) et (3) telle qu'en traversant les perforations, respectivement (5) et (6), ces trois saillies émergent du côté intérieur de l'assemblage de quelques millimètres.

Au surplus, chaque patte (16) est assortie de moyens pour le blocage du gousset (11) relativement à l'élément profilé (1, 2) ou (3), moyens qui coopèrent avec la partie de la patte (16) dépassant l'élément profilé.

Dans la variante de construction représentée aux figures 1, 2 et 5 (moitié droite), les pattes (16) de chaque gousset (11) présentent une base (17) rétrécie en partie centrale sur une hauteur très légèrement supérieure à l'épaisseur des ailes (7) des éléments (1, 2) et (3) et les deux parties (18) du sommet de cette patte en débord par rapport à la base rétrécie (17) et, une fois traversée la perforation longitudinale (5) avec laquelle la patte coopère, en débord par rapport à l'élément profilé sont courbées en sorte que le sommet (19) de chaque patte (16) a la forme d'un S dont les deux extrémités (18) s'appuient contre l'aile (7).

La déformation des deux parties (18) des pattes (16), schématisée par les flèches (25), peut être aisément obtenue par la manipulation d'une clé (20) telle que représentée à la figure 3, clé dont la tête est percée d'un orifice circulaire (21), d'un diamètre sensiblement équivalent à la base (17), prolongé de deux évidements (22) qui, disposés diamétralement relativement au trou (21), sont destinés à recevoir les parties (18) des pattes (16).

Dans la variante de construction représentée aux figures 1, 2 et 5 (moitié droite), les pattes (16) des goussets (11) présentent une base (23) rétrécie en partie latérale sur une hauteur très légèrement supérieure à l'épaisseur des ailes (7) des éléments (1, 2) et (3). La partie (24) du sommet de cette patte en débord par rapport à la base rétrécie (23) est destinée à être courbée, comme il est schématisé par la flèche (26), en sorte que le sommet (27) de la patte (16) puisse être courbé selon un J dont l'extrémité libre (24) s'appuie contre l'aile (7).

La déformation d'une telle patte peut être obtenue à l'aide d'une clé du type de celle représentée à la figure 3 dans laquelle l'orifice (21) est prolongé cette fois d'un seul évidement (22).

Selon deux autres variantes des moyens de blocage, illustrées par le gousset représenté à la figure 4, on prévoit de former une patte centrale (16) d'une largeur constante percée d'une lumière (28) dont le bord supérieur (29) est situé au-dessus de l'aile (7) de la cornière (1, 2) ou (3) lorsque ladite patte traverse la perforation longitudinale (5) avec laquelle elle coopère en vue de l'assemblage des cornières. Dans leur première construction illustrée en partie droite de la figure 4, les moyens de blocage de la patte (16) relativement à la cornière sont formés d'une lame (30) à courbure convexe, élastiquement déformable, qui traverse la lumière (28), perpendiculairement à la direction générale de la cornière, dont l'âme s'appuie contre le bord (29) et dont les deux extrémités (31, 32) s'appuient sur l'aile (7) de ladite cornière. Dans une seconde variante de construction, les moyens de blocage de la patte (16) sont formés d'une clavette (33) en tôle pliée, à section droite en L, munie d'un orifice (34) percé en son centre sur l'arête (35) du dièdre formé par les deux ailes de la clavette ; la hauteur de la clavette (33) est supérieure à la différence de niveau existant entre le bord supérieur (29) de la lumière (28) et l'aile (7) de l'élément profilé, en sorte que, lorsque la clavette est encastrée dans la lumière, par déformation élastique provoquant l'écartement de ses ailes, elle se bloque ensuite automatiquement dans ladite lumière, par rapprochement élastique de ses ailes, lorsque son orifice central (34) vient se situer sous le bord supérieur de la lumière (28). Avantageusement, la clavette (33) est à bords convergents, c'est-à-dire amincis à la partie avant par laquelle elle va pénétrer la lumière, de manière à faciliter cette pénétration.

Il est à noter que toutes les constructions qui viennent d'être données à propos du gousset (11) permettent la réalisation de ce gousset à partir d'une tôle découpée et pliée. Tous les ergots (15), après découpe de la tôle du gousset aux dimensions et formes appropriées, sont relevés de 90° du même côté de ladite tôle. Les pattes (16), quelle que soit leur conformation, sont obtenues par un découpage de la tôle puis un pliage de celle-ci du côté des ergots (15). Dans le cas où la patte (16) présente une base rétrécie, soit centralement selon (17), soit latéralement selon (23), ce rétrécissement est obtenu par un ou deux découpages supplémentaires avant pliage de la patte à 90° vers le haut. Dans le cas où la patte (16) présente une lumière centrale (28), cette dernière est également obtenue par un découpage de la tôle avant pliage de la patte.

Avantageusement, le gousset (11) est complété le long de son bord longitudinal extérieur (36) d'un repli central (37) destiné à faciliter le centrage du gousset lors de sa mise en position relativement aux cornières (1) et (2), ou (1) et (3), ou (2) et (3), qu'il doit assembler.

De préférence également, le plat du gousset comporte un prolongement (38) qui, dans chaque partie située entre la patte centrale (16) et un ergot latéral (15), déborde largement lesdits ergots et la patte de façon à constituer un appui supplémentaire du plat du gousset contre l'aile de l'élément profilé à assembler, au-delà des perforations transversales (6) et longitudinales (5).

On sait que, par construction, les perforations (5) et (6) en alternance sur chaque aile (7) des cornières (1, 2) et (3) sont disposées selon un pas constant, ce pas étant au surplus égal à la largeur de l'aile (7). On connaît également, toujours par construction, la position relative desdites perforations ainsi que leurs dimensions.

En conséquence, en considérant deux à deux les cornières à assembler, on peut par le calcul déterminer aisément les valeurs des longueurs X, Y et Z existant entre, respectivement, la première paire d'ergots (15), les pattes (16) et la seconde paire d'ergots (15) prises dans le sens longitudinal sur tout gousset (11). Par exemple, la longueur Y est exclusivement fonction du pas et a pour valeur 2, 12 P.

Autrement dit, pour un assemblage orthogonal de cornières dont les caractéristiques géométriques sont connues (largeur des ailes et perforations), les caractéristiques géométriques des goussets pour l'assemblage desdites cornières sont également connues.

Pour passer d'une construction de cornières à une autre construction, plus large ou plus étroite, les goussets appropriés à l'assemblage de ces autres cornières seront aisément déterminés, par simple homothétie.

On voit que l'emploi des goussets (11) pour l'assemblage illustré aux figures 1 et 2 entraîne une perte de place, et par suite une perte de volume, du fait de la présence d'une partie des plats des goussets qui s'étendent à 45° hors des cornières à assembler.

Or, dans certains cas, il est souhaitable qu'il n'y ait aucune perte de place dans les angles de la structure à réaliser.

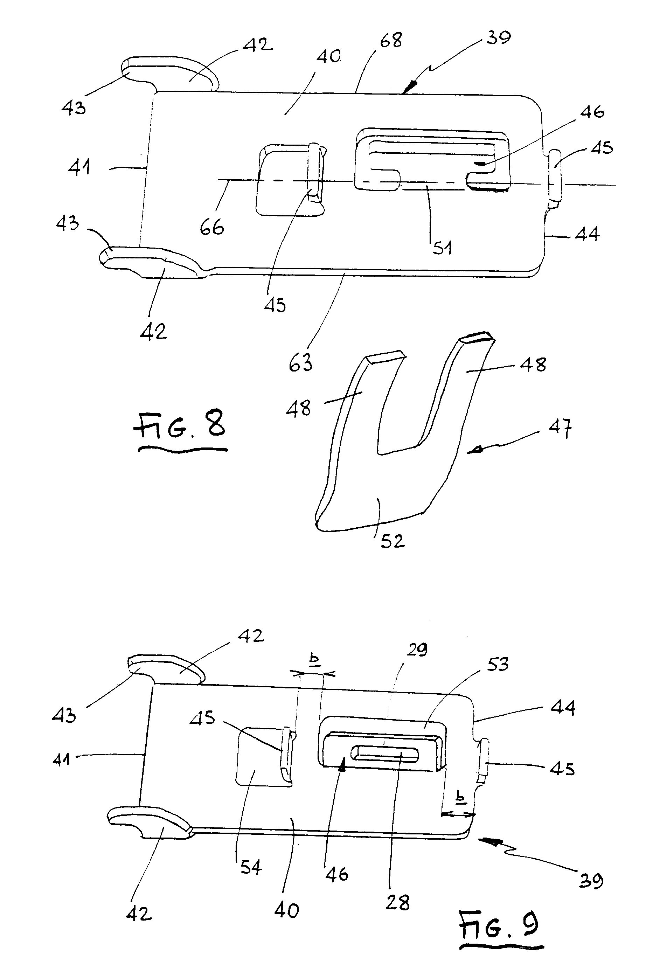

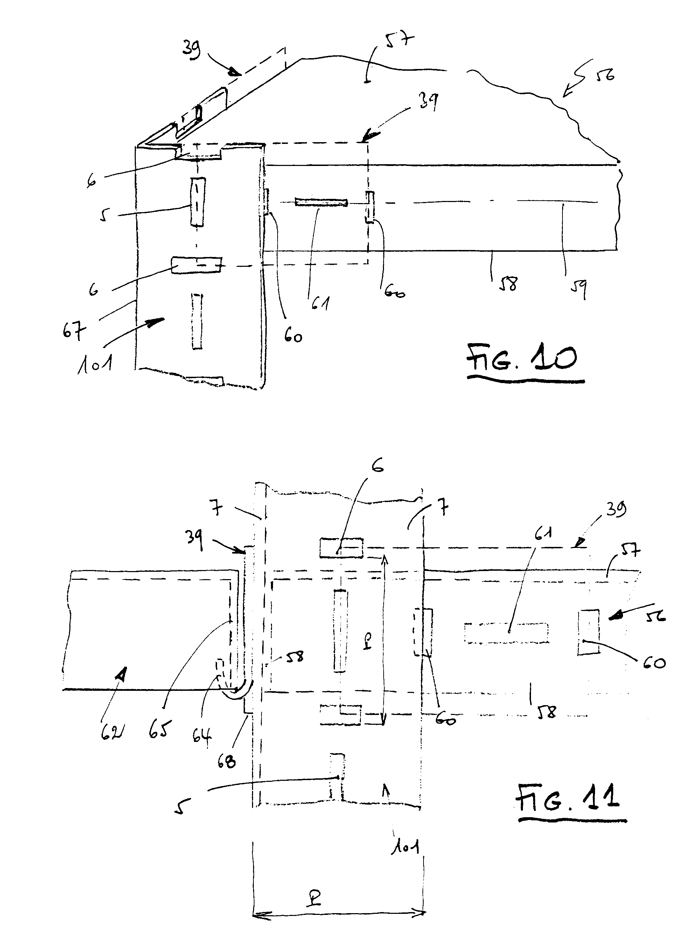

A cette fin, on réunit par paires les cornières à l'aide de goussets du deuxième type, pour réaliser l'assemblage représenté aux figures 6 et 7.

Dans cet exemple de réalisation, les sections d'extrémité des trois profilés (1, 2) et (3) sont chacune confondues avec l'axe médian transversal (10) d'une perforation transversale (6).

Pour leur assemblage deux à deux, les cornières sont également disposées orthogonalement, et "bord à bord", comme il a été décrit à propos de l'assemblage des figures 1 et 2.

Dans le plan horizontal, le longeron (102) et la traverse (103) sont réunis à l'aide d'un gousset (11) du premier type. Le blocage de ce gousset est obtenu par l'un quelconque des moyens décrits ci-dessus, par exemple à l'aide de deux lames (30), qui chacune pénètre une lumière (28) découpée dans la patte centrale (16) qui traverse une perforation longitudinale (5) (figure 7).

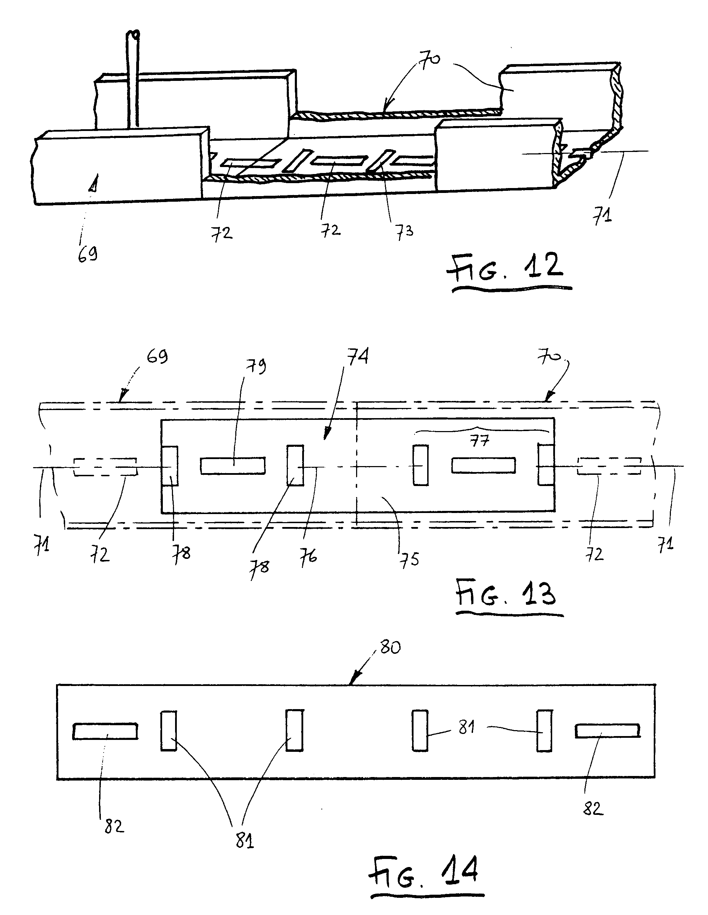

Dans les deux plans verticaux formés, le longeron (102), et respectivement la traverse (103), est assemblé au montant (101) à l'aide du gousset (39) représenté en détail à la figure 8.

Le gousset (39) a la particularité d'être constitué par un fer plat allongé (40) présentant à l'une de ses deux extrémités (41) deux pattes latérales (42), pliées à sensiblement 90° et prolongées chacune vers l'avant d'un doigt (43) situé au-dessus du plat (40) et distant dudit plat d'une hauteur égale à l'épaisseur des ailes des éléments perforés à assembler, et comportant à son autre extrémité (44) deux ergots transversaux (45) et une patte longitudinale (46) centrée entre les deux ergots. Les trois dernières saillies précitées, à savoir la patte (46) et les deux ergots (45), constituent un ensemble identique à l'ensemble (15-16) disposé à chaque extrémité du gousset (11) du premier type. Ces trois saillies, qui s'étendent perpendiculairement au plat (40), du même côté que les pattes (42) prolongées des doigts (43), sont cette fois alignées selon sensiblement l'axe médian longitudinal (66) du gousset (39), donc perpendiculairement à ses extrémités (41) et (44). Dans cette construction, les deux extrémités (41) et (44) sont donc parallèles entre elles et, avantageusement, l'ergot (45) le plus extrême de l'ensemble (45-46) est placé à proximité immédiate de l'extrémité (44) du gousset (39).

L'assemblage du longeron (102) (ou de la traverse (103)) et du montant (101), tel qu'illustré aux figures 6 et 7, s'obtient par pénétration des doigts (43) des pattes (42) dans les deux perforations transversales (6) les plus extrêmes du montant (101), dont en particulier par pénétration dans celle des perforations transversales dont l'axe médian transversal (10) est confondu avec la section d'extrémité de la cornière (101).

Pour que les pattes (42) et les doigts (43) ne forment pas saillie par rapport à cette section d'extrémité, l'épaisseur desdites pattes et desdits doigts est égale à la moitié de la largeur de toute perforation transversale (6) ; ainsi, l'élément d'extrémité d'accrochage (42-43) est situé exactement en affleurement des sections d'extrémité (8).

Pour parfaire l'appui du gousset (39) sur le montant (101), et notamment assurer une bonne triangulation, l'ergot (45) le plus intérieur de l'ensemble (45-46) est alors en appui contre le bord longitudinal du montant (101) et, relativement au longeron (102), à l'intérieur de celle des perforations transversales (6) formée au niveau de la section d'extrémité. En conséquence, ce premier ergot (45) a une épaisseur qui est très légèrement inférieure à la moitié de la largeur de toute perforation transversale (5) ; en outre, sa face avant est disposée, relativement au chant d'extrémité (41) à une longueur égale au demi-pas augmenté de la moitié de la hauteur de la perforation transversale (6).

Compte tenu du mode de coopération préférentiel qui vient d'être exposé, il est clair que la patte (46) du gousset (39) est prévue par construction pour coopérer avec la perforation longitudinale du longeron (102) la plus proche de l'extrémité et que l'ergot (45) le plus extrême, confondu avec le chant d'extrémité (44), est prévu par construction pour coopérer avec la deuxième des perforations transversales (6) percée dans le longeron.

Le blocage du gousset (39) relativement au longeron (102) peut être obtenu par tous moyens équivalents à ceux qui ont été décrits à propos du blocage du gousset (11), par exemple à l'aide d'une lame (30), d'une cornière (33), ou après des déformations en J ou en S d'une patte (46) dont la base est préalablement découpée pour être rétrécie.

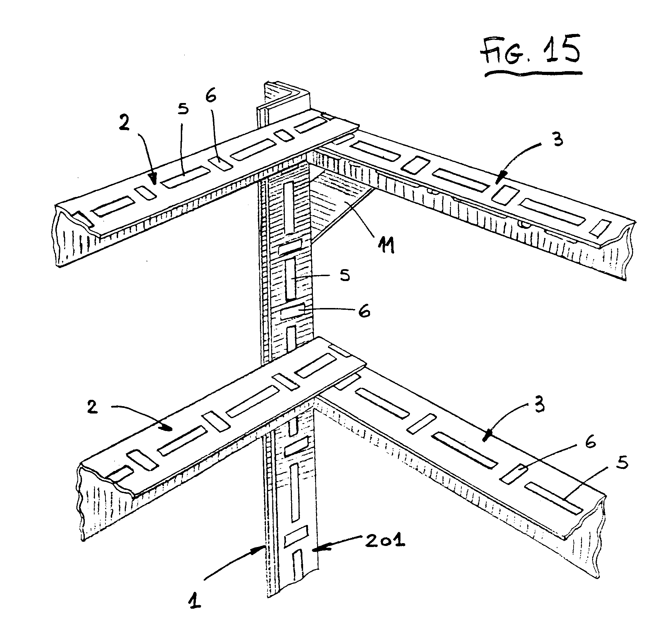

Le gousset (39) représenté à titre d'exemple à la figure 8 est en première solution destiné à être bloqué après déformation de son sommet selon un S, à l'aide de la clé (20). Le gousset représenté à la figure 9 est destiné à être bloqué à l'aide d'une lame (30) ou d'une cornière en L (33).

Comme autre exemple de moyen de blocage représenté en option à la figure 8, la patte (46) à base rétrécie est destinée à recevoir une lame (47), de préférence bombée convexe et élastiquement déformable, découpée en U, les deux ailes (48) de ce U étant destinées à être glissées sous le sommet (50) de la patte (46) de sorte à encadrer la base rétrécie (51), l'âme (52) du U et les extrémités libres des ailes (48) s'appuyant ensuite sur l'aile (7) du longeron (102) alors assemblé au montant (101).

Cet assemblage à l'aide de ces U (47) est d'ailleurs celui qui a été donné à titre d'exemple en figure 7. Il est clair que, puisque les moyens de blocage sont transposables du gousset (11) du premier type au gousset (39) du deuxième type, la transposition inverse s'impose ; autrement dit, la lame en U (47) peut aussi convenir pour le blocage d'un gousset (11), dans la construction donnée pour celui-ci en partie droite de la figure 5.

Comme tout gousset (11), le gousset (39) peut être obtenu à partir d'une tôle découpée et pliée.

Dans toutes les réalisations de goussets (11), la patte (16) est exactement centrée entre les deux ergots latéraux (15). Il en est de même pour le gousset (39), et en conséquence les découpes (53) et (54) réalisées dans le plat (40) aux fins de former, respectivement, la patte centrale (46) et l'ergot (45), sont telles que la distance séparant la découpe (53) du chant (44) est égale à la valeur (b) et, de même, que la distance séparant la découpe (53) de la découpe (54) est égale à cette valeur (b), ainsi qu'il est visible à la figure 9.

Les assemblages représentés et décrits ci-dessus ont été donnés à titre d'exemples pour la réalisation d'angles de structures. Il est bien clair que ces exemples s'appliquent tels quels pour le montage de longerons et de traverses en des points quelconques des montants (1) ou (101), et que les goussets (11) et (39) conviennent également indifféremment pour ces assemblages intermédiaires. Toutefois, pour chaque cas où un gain de place et de volume sera nécessaire, le gousset (39) sera choisi de préférence au gousset (11).

Dans tous les cas, le gousset (11) est avantageusement retenu pour assembler un longeron et une traverse. Si la structure rectangulaire constituée de deux longerons et de deux traverses doit recevoir un plateau en bois, le gousset (11) pourra avantageusement être percé au centre de son plat d'un orifice (55) que pourra alors traverser une vis d'axe (55') permettant la fixation du plateau au gousset.

Pour des assemblages comportant des tablettes à bords tombants, on utilise des montants (101) répondant aux caractéristiques précitées ainsi que des goussets du deuxième type.

Dans la représentation en perspective d'un tel assemblage, donnée à la figure 10, on montre une tablette (56) constituée d'un plateau (57) et de bords tombants (58). La tablette est assemblée à un montant (101) à l'aide d'un gousset (39), extérieur à l'assemblage comme il l'est dans l'assemblage de la figure (6), représenté en pointillés pour une meilleure clarté du dessin. Chaque bord tombant (58), plié à 90° par rapport au plateau (57), comporte une ligne de perforations qui s'étend selon l'axe médian longitudinal (59) dudit bord. Chaque ligne présente en alternance une perforation (60), dite transversale, qui s'étend perpendiculairement à l'axe (59), et une perforation (61), dite longitudinale, qui s'étend parallèlement à l'axe (59). Les perforations (60) et (61) sont disposées selon un pas constant, égal au pas (P) du montant (101), et avec des caractéristiques de dimensions et de positions relatives rigoureusement équivalentes à celles des perforations (5) et (6) dont est pourvu le montant (101).

Sur chaque bord (58), la ligne de perforations est avantageusement réduite à trois perforations, à savoir deux perforations transversales (60) et une perforation longitudinale (61), centrée entre lesdites deux perforations transversales. Dans ce cas, la perforation transversale la plus proche du coin de la tablette (56) est distante dudit coin d'une valeur égale au pas (P) diminuée de l'épaisseur de la tôle formant le montant (101). Ainsi, lors de l'assemblage de la tablette (56) et de chaque montant (101), la première perforation transversale (60) est à moitié apparente derrière le montant (101) qui lui correspond, et, par suite, dans chacun de ces quatre angles, la tablette peut être assemblée à un montant (101) à l'aide de deux goussets (39) de mêmes caractéristiques et de mêmes dimensions que ceux utilisés pour réaliser l'assemblage des figures 6 et 7.

Pour leur fixation sur le montant (101), les goussets (39) présentent chacun, à leur partie avant, deux pattes (42) prolongées de deux doigts (43) qui font saillies en arrière du montant. Pour pouvoir s'encastrer entre ces deux saillies, la tablette (56) a alors avantageusement une hauteur hors tout légèrement inférieure à l'intervalle existant entre les deux dispositifs (42-43) de chaque gousset (39). En d'autres termes, l'épaisseur de la tablette est légèrement inférieure au pas (P) diminuée de la largeur d'une perforation transversale (6). Cette particularité est visible notamment sur les figures 10 et 11.

Sur la figure 11, il a été représenté une variante de gousset (39) permettant de supporter, à l'extérieur du montant (101), une tablette (62), à bords tombants perforés ou non, qui s'étend entre quatre montants (101), extérieurement à chacun d'entre eux.

Ce gousset (39) est prolongé sur au moins une partie de son bord longitudinal inférieur (63) d'un retour (64) en forme de crochet, extérieur au gousset et séparé du plat (40) d'une distance légèrement supérieure à l'épaisseur du bord tombant (65) de la tablette (62).

Le gousset (39) ne s'étendant pas, par construction, jusqu'à l'arête extérieure (67) du montant (101), la tablette (62) recouvre ainsi en presque totalité le retour (64), dont seul le bas de la boucle est visible.

Dans cette variante de gousset à retour (64), il faut prévoir par exception deux modèles, que l'on dénommera "gauche" et "droite" selon que la boucle devra être formée près du bord inférieur (63) ou près du bord supérieur (68) (selon la représentation de la figure 8) pour un emploi de gousset (39) à droite ou à gauche du montant (101).

Par application du même concept de perforations pratiquées dans des éléments profilés et de blocages de goussets relativement auxdites perforations, on peut aussi concevoir des profilés et des goussets pour la réalisation d'un chemin de câbles.

En se reportant à la figure 12, on a représenté deux éléments profilés à section droite en U, respectivement gauche (69) et droit (70), dont au moins l'âme comporte une ligne de perforations qui s'étend selon l'axe médian longitudinal (71) de ladite âme.

Chaque ligne (71) présente en alternance une perforation longitudinale (72) et une perforation transversale (73). Chaque profilé en U (69, 70) est coupé en sorte que sa section d'extrémité est confondue avec l'axe médian transversal d'une perforation longitudinale (72).

Le profilé (69) est suspendu à un plafond, par exemple par un câble ou une barre de suspension dont l'extrémité traverse une perforation (72) ou (73) et est fileté de manière à coopérer avec un écrou et une rondelle serrés sous l'âme du profilé (69). L'aboutement du profilé (70) sur le profilé (69) est obtenu à l'aide d'un gousset (74) (figure 13) constitué par un fer plat allongé (75) comportant, alignés selon sensiblement son axe médian longitudinal (76), deux ensembles (77) formés chacun de deux ergots transversaux (78) et d'une patte longitudinale (79). Chaque ensemble (77) est de préférence conformé comme la partie arrière du gousset (39), c'est-à-dire que la patte longitudinale (79) est exactement centrée entre deux ergots (78).

Dans la variante représentée à la figure 14, le gousset (80) est formé d'un plat plus allongé dans lequel chaque ensemble constitué de deux ergots (81) et d'une patte (82) est tel que la patte (82) est extérieure aux deux ergots.

La figure 15 montre un assemblage dans lequel le montant est constitué d'une cornière telle que (1) qui double une cornière identique (201). Un avantage de cette construction est qu'elle permet de renforcer, sur tout ou partie de leur hauteur, les montants en les constituant chacun de une, de deux ou de plus de deux cornières empilées suivant leur longueur de façon à réaliser une épaisseur multiple. De cette façon, pour un rayonnage de grande hauteur, on peut répartir la charge en réduisant l'épaisseur des montants, par exemple successivement triples, doubles, puis simples de la base jusqu'au sommet, ce qui se fait sans variation de la profondeur utile de stockage et sans problème délicat de fixation des cornières les unes aux autres.

En outre, grâce à la disposition des cornières (1-201) du montant à l'extérieur de l'assemblage, et à la fixation des goussets sur l'aile libre de ces montants, il est facile d'effectuer le montage de différents éléments accessoires destinés par exemple à réunir deux rayonnages entre eux (par exemple des passerelles). En outre, on peut alors associer aux montants des longerons qui débordent lesdits montants.

## Revendications

1. Assemblage d'éléments profilés perforés, pour la construction de rayonnages et de meubles, notamment métalliques, ledit assemblage étant du type constitué d'éléments profilés perforés exclusivement ou du type constitué de tels éléments associés à des tablettes à bords tombants, et au moins certains des éléments profilés dudit assemblage étant réunis, entre eux et/ou avec une tablette, au moins par paire à l'aide de goussets (11), lesdits éléments profilés et les bords des tablettes de cet assemblage étant du genre de ceux dont au moins une aile comporte une ligne de perforations qui s'étend selon sensiblement l'axe médian longitudinal de ladite aile et qui présente en alternance une perforation dite longitudinale, qui s'étend parallèlement à l'axe médian longitudinal, et une perforation dite transversale, qui s'étend perpendiculairement à l'axe médian longitudinal, lesdites perforations étant disposées selon un pas constant, et lesdits goussets de cet assemblage étant chacun constitués par un fer plat allongé (12) présentant à chacune de ses deux extrémités des moyens pour sa fixation sur au moins un élément profilé (ou une tablette), lesdits moyens comportant des saillies qui coopèrent avec les perforations de l'élément profilé (ou de la tablette), caractérisé en ce que chaque gousset comporte au moins à une extrémité un ensemble de trois saillies alignées, à savoir deux ergots latéraux (15), qui coopèrent avec deux perforations transversales (6), et une patte centrale (16), qui est disposée perpendiculairement aux ergots et qui coopère avec une perforation longitudinale (5), lesdits deux ergots et ladite patte s'étendant sensiblement perpendiculairement au plat du gousset, du même côté par rapport au plat, et traversant la perforation avec laquelle, respectivement, ils coopèrent, et en ce que ladite patte est assortie de moyens, pour son blocage relativement à l'élément profilé (ou à la tablette), qui coopèrent avec la partie de la patte (16) dépassant l'élément profilé (ou la tablette).

2. Assemblage selon la revendication 1 caractérisé en ce que au moins l'une des pattes centrales d'au moins un gousset est percée d'une lumière dont le bord supérieur est situé au-dessus de l'aile de l'élément profilé (ou au-dessus du bord tombant de la tablette) et en ce que les moyens de blocage de la patte relativement à l'élément profilé sont formés d'une lame, de préférence courbe et élastiquement déformable, qui traverse la lumière, perpendiculairement à la direction générale de l'élément profilé, et dont les deux extrémités s'appuient sur l'aile de l'élément profilé.

3. Assemblage selon la revendication 1 caractérisé en ce que au moins l'une des pattes centrales d'au moins un gousset est percée d'une lumière dont le bord supérieur est situé au-dessus de l'aile de l'élément profilé (ou au-dessus du bord tombant de la tablette) et en ce que les moyens de blocage de la patte relativement à l'élément profilé sont formés d'une clavette en tôle pliée, à section droite en L, munie d'un orifice percé en son centre sur l'arête du dièdre formé par les deux ailes de la clavette, la hauteur de ladite clavette étant supérieure à la différence de niveau existant entre le bord supérieur de la lumière et l'aile de l'élément profilé, ladite clavette étant encastrée dans la lumière, par déformation élastique provoquant l'écartement de ses ailes, et se bloquant ensuite dans ladite lumière, par rapprochement élastique de ses ailes lorsque son orifice central vient se situer sous le bord supérieur de la lumière.

4. Assemblage selon la revendication 1 caractérisé en ce que au moins l'une des pattes centrales d'au moins un gousset présente une base rétrécie sur une hauteur supérieure à l'épaisseur de l'aile de l'élément profilé (ou à l'épaisseur du bord tombant de la tablette) et en ce que les moyens de blocage de la patte relativement à l'élément profilé sont formés d'une lame, de préférence courbe et élastiquement déformable, découpée en U, les deux ailes de ce U étant glissées sous le sommet de la patte de sorte à encadrer la base rétrécie, l'âme du U et les extrémités libres des ailes du U s'appuyant sur l'aile de l'élément profilé.

5. Assemblage selon la revendication 1 caractérisé en ce que au moins l'une des pattes centrales d'au moins un gousset présente une base rétrécie sur une hauteur très légèrement supérieure à l'épaisseur de l'aile de l'élément profilé (ou à l'épaisseur du bord tombant de la tablette) et en ce que au moins une et de préférence les deux parties du sommet de cette patte en débord par rapport à l'élément profilé et par rapport à la base rétrécie sont courbées en sorte que le sommet de ladite patte a la forme d'un J ou d'un S dont l'extrémité libre, ou respectivement les deux extrémités, s'appuie(nt) sur l'aile de l'élément profilé.

6. Assemblage selon l'une quelconque des revendications 1 à 5 caractérisé en ce que chacune des deux extrémités d'au moins un gousset comporte un ensemble de trois saillies alignées, à savoir deux ergots latéraux et une patte centrale, en ce que les deux extrémités dudit gousset sont perpendiculaires entre elles, et en ce que l'âme du gousset plat s'étend entre ces deux extrémités selon une direction inclinée à 45° par rapport à chacune desdites extrémités.

7. Assemblage selon l'une quelconque des revendications 1 à 5 caractérisé en ce que les deux extrémités d'au moins un gousset sont parallèles entre elles et en ce que ledit gousset comporte un seul ensemble de trois saillies alignées selon une direction perpendiculaire auxdites extrémités, un ergot latéral dudit ensemble étant placé à proximité immédiate d'une extrémité du gousset.

8. Assemblage selon l'une quelconque des revendications 1 à 7 caractérisé en ce que, à chaque extrémité du gousset, la patte est exactement centrée entre les deux ergots latéraux.

9. Assemblage selon l'une quelconque des revendications 1 à 8 caractérisé en ce que le pas selon lequel sont disposées les perforations est égal à la largeur de l'aile de l'élément profilé (ou de la tablette) dans laquelle sont prévues lesdites perforations et en ce que la ligne de ces perforations s'étend selon l'axe médian longitudinal de ladite aile.

10. Assemblage selon l'une quelconque des revendications 1 à 9 caractérisé en ce que, dans la partie située entre la patte centrale et chaque ergot latéral, le plat du gousset comporte un prolongement qui déborde largement les ergots et la patte de façon à constituer un appui supplémentaire du plat du gousset contre l'aile de l'élément profilé au-delà des perforations transversales.

11. Elément profilé perforé, pour la réalisation de l'assemblage selon l'une quelconque des revendications 1 à 10, ledit élément profilé étant du type de ceux dont au moins une aile comporte une ligne de perforations qui s'étend selon sensiblement l'axe médian longitudinal de ladite aile et qui présente en alternance une perforation dite longitudinale, qui s'étend parallèlement à l'axe médian longitudinal, et une perforation dite transversale, qui s'étend perpendiculairement à l'axe médian longitudinal, lesdites perforations étant disposées selon un pas constant, et étant caractérisé en ce que le pas selon lequel sont disposées les perforations est égal à la largeur de l'aile de l'élément profilé dans laquelle sont prévues lesdites perforations et en ce que la ligne de ces perforations s'étend selon l'axe médian longitudinal de ladite aile.

12. Elément profilé selon la revendication 11, caractérisé en ce que, le long de chaque ligne de perforations, la distance séparant une perforation longitudinale et une perforation transversale est constante sur toute la longueur de ladite ligne.

13. Elément profilé selon l'une quelconque des revendications 11 et 12, caractérisé en ce que au moins l'une de ses deux sections d'extrémité est confondue avec l'axe médian transversal d'une perforation longitudinale ou avec l'axe médian transversal d'une perforation transversale.

14. Tablette à bords tombants perforés pour la réalisation de l'assemblage selon l'une quelconque des revendications 1 à 10 par sa réunion avec des éléments profilés perforés selon l'une quelconque des revendications 11 à 13, ladite tablette étant du type de celles dont au moins un bord tombant plié à 90° par rapport au plateau comporte une ligne de perforations qui s'étend selon sensiblement l'axe médian longitudinal dudit bord et étant caractérisée en ce que chaque ligne de perforations présente en alternance une perforation dite longitudinale, qui s'étend parallèlement à l'axe médian longitudinal, et une perforation dite transversale, qui s'étend perpendiculairement à l'axe médian longitudinal, lesdites perforations étant disposées selon un pas constant.

15. Gousset pour la réalisation de l'assemblage selon l'une quelconque des revendications 1 à 10, par la réunion d'éléments profilés perforés selon l'une quelconque des revendications 11 à 13, ledit gousset, constitué par un fer plat allongé, étant caractérisé en ce qu'il comporte, alignés à chacune de ses deux extrémités, deux ergots latéraux et une patte centrale disposée perpendiculairement aux ergots, lesdits deux ergots et ladite patte s'étendant sensiblement perpendiculairement au plat du gousset, du même côté par rapport au plat, ladite patte étant destinée à être assortie de moyens, pour son blocage relativement à l'élément profilé, qui coopèrent avec la partie de la patte dépassant l'élément profilé.

16. Gousset pour l'assemblage, orthogonalement l'un à l'autre, de deux éléments profilés perforés selon l'une quelconque des revendications 11 à 13, ledit gousset étant alors plus particulièrement destiné à la liaison de profilés dans un angle de l'assemblage, ou pour l'assemblage d'un élément profilé perforé selon l'une quelconque des revendications 11 à 13 avec une tablette selon la revendication 14, caractérisé en ce qu'il est constitué par un fer plat allongé présentant à l'une de ses deux extrémités deux pattes latérales, pliées à sensiblement 90° et prolongées chacune vers l'avant d'un doigt situé au-dessus du plat et distant dudit plat d'une hauteur égale à l'épaisseur de l'élément profilé, et en ce qu'il comporte à l'autre de ses deux extrémités, alignés selon sensiblement l'axe médian longitudinal dudit gousset, donc perpendiculairement à ses extrémités, deux ergots transversaux et une patte longitudinale, lesdits deux ergots et ladite patte s'étendant perpendiculairement au plat du gousset, du même côté que les pattes prolongées des doigts.

17. Gousset pour l'aboutement de deux élément profilés selon l'une quelconque des revendications 11 à 14, ledit gousset étant plus particulièrement destiné à la liaison entre deux éléments profilés à section droite en U, au niveau de leurs âmes, pour la réalisation d'un chemin de câbles, caractérisé en ce qu'il est constitué par un fer plat allongé comportant, alignés selon sensiblement son axe médian longitudinal, deux ensembles formés chacun de deux ergots transversaux et d'une patte longitudinale et destinés chacun à être fixés en bout d'un élément profilé.

18. Gousset selon la revendication 17 caractérisé en ce que, pour chaque ensemble, la patte longitudinale est centrée entre les deux ergots transversaux.

**Patentansprüche**

1. Satz von gelochten Profilelementen zum Zusammenbau von Regalen und Möbeln insbesondere aus Metall, wobei der Satz ausschließlich gelochte Profilelemente enthält oder aus solchen und aus Fachböden mit Saumstreifen besteht, denen die gelochten Elemente zugeordnet sind, und wobei wenigstens einige der Profilelemente des Satzes miteinander und/oder mit einem Fachboden wenigstens paarweise mit Hilfe von Eckstücken (11) verbunden sind, wobei die Profilelemente und die Saumstreifen der Fachböden dieses Satzes derart gestaltet sind, daß wenigstens ein Schenkel eine gerade Lochreihe aufweist, die sich im wesentlichen in der Mitte der Längsachse des genannten Schenkels erstreckt und die abwechselnd ein Längslangloch, das sich parallel zur Längsmittenachse erstreckt, und ein Querlangloch, das sich quer zur Längsmittenachse erstreckt, aufweist, wobei diese Löcher einen konstanten Teilungsabstand aufweisen, und die Eckstücke dieses Satzes jeweils aus einem flachen Eisenband (12) bestehen, das an seinen beiden Enden Einrichtungen zum Befestigen an wenigstens einem Profilelement (oder Fachboden) aufweist, wobei diese Einrichtungen aus Vorsprüngen bestehen, die mit den Löchern des Profilelements (oder des Fachbodens) zusammenwirken, **dadurch gekennzeichnet**, daß jedes Eckstück wenigstens an einem Ende eine Gruppe aus drei ausgerichteten Vorsprüngen aufweist, nämlich zwei Quervorsprünge (15), die mit zwei Querlanglöchern (6) zusammenwirken, und eine Mittenfahne (16), die senkrecht zu den Quervorsprüngen angeordnet ist und mit einem Längslangloch (5) zusammenwirkt, wobei die zwei Quervorsprünge und die genannte Fahne sich im wesentlichen senkrecht zur Flachseite des Eckstücks auf derselben Seite in Bezug auf die Flachseite erstrecken und jeweils das Loch durchdringen, mit dem sie zusammenwirken, und daß die genannte Fahne mit Einrichtungen zum Blockieren derselben an dem Profilelement (oder dem Fachboden) versehen ist, die mit dem Abschnitt der Fahne (16) zusammenwirken, der über das Profilelement (oder den Fachboden) vorsteht.

2. Satz nach Anspruch 1, dadurch gekennzeichnet, daß wenigstens eine der Mittenfahnen wenigstens eines Eckstücks mit einem Durchbruch versehen ist, dessen oberer Rand über dem Schenkel des Profilelements (oder über dem Saumstreifen des Fachbodens) liegt, und daß die Einrichtungen zum Blockieren der Fahne gegenüber dem Profilelement von einer Zunge gebildet sind, die vorzugsweise wellig und elastisch verformbar ist und die den Durchbruch senkrecht zur Hauptrichtung des Profilelements durchdringt und deren zwei Enden sich an den Schenkel des Profilelements anlegen.

3. Satz nach Anspruch 1, dadurch gekennzeichnet, daß wenigstens eine der Mittenfahnen wenigstens eines Eckstücks mit einem Durchbruch versehen ist, dessen oberer Rand über dem Schenkel des Profilelements (oder über dem Saumstreifen des Fachbodens) liegt und daß die Einrichtungen zum Blockieren der Fahne bezüglich des Profilelements von einem Keil aus gebogenem Blech von L-förmigen Querschnitt gebildet sind, der mit einem Loch in der Mitte seines Scheitels, der von den zwei Schenkeln des Keils gebildet ist, versehen ist, wobei die Höhe des Keils größer als die Höhendifferenz ist, die zwischen dem oberen Rand des Durchbruchs und dem Schenkel des Profilelements vorhanden ist, der Keil in dem Fenster durch elastische Verformung festgehalten ist, die eine Aufspreizung seiner Schenkel hervorruft, und sich folglich in dem Durchbruch durch elastische Rückstellung seiner Schenkel blockiert, wenn sein Mittenloch unter den oberen Rand des Durchbruchs zu liegen kommt.

4. Satz nach Anspruch 1, dadurch gekennzeichnet, daß wenigstens eine der Mittenfahnen wenigstens eines Eckstücks einen Fuß aufweist, der über eine Höhe eingeschnürt ist, die größer als die Dicke des Schenkels des Profilelements (oder als die Dicke des Saumstreifens des Fachbodens) ist, und daß die Einrichtungen zum Blockieren der Fahne gegenüber dem Profilelement von einer Zunge gebildet sind, die vorzugsweise gebogen und elastisch verformbar und U-förmig gestaltet ist, wobei die zwei Schenkel dieses U unter den Kopf der Fahne geschoben sind, um den eingeschnürten Fuß zu umschließen, und der Verbindungsschenkel des U und die freien Enden der Schenkel des U sich an den Schenkel des Profilelements anlegen.

5. Satz nach Anspruch 1, dadurch gekennzeichnet, daß wenigstens eine der Mittenfahnen wenigstens eines Eckstücks einen Fuß aufweist, der über eine Möhe eingeschnürt ist, die leicht größer als die Dicke des Schenkels des Profilelements (oder als die Dicke des Saumstreifens des Fachbodens) ist, und daß wenigstens ein und vorzugsweise die beiden Abschnitte des Kopfes dieser Fahne, die über das Profilelement und den verengten Fuß vorstehen, derart gebogen sind, daß der Kopf der genannten Fahne die Form eines J oder eines S aufweist, dessen freies Ende bzw. dessen zwei Enden sich an den Schenkel des Profilelements anlegt bzw. anlegen.

6. Satz nach einem der Ansprüche 1 bis 5, dadurch gekennzeichnet, daß jedes der zwei Enden wenigstens eines Eckstücks eine Gruppe aus drei ausgerichteten Vorsprüngen aufweist, nämlich zwei Quervorsprünge und eine mittlere Fahne, und daß die zwei Enden des Eckstücks zueinander senkrecht sind und der Verbindungsschenkel des flachen Eckstücks sich zwischen den zwei Enden in einer Richtung erstreckt, die unter 45° gegenüber jedem der genannten Enden verläuft.

7. Satz nach einem der Ansprüche 1 bis 5, dadurch gekennzeichnet, daß die zwei Enden wenigstens eines Eckstücks zueinander parallel sind, und daß das Eckstück eine einzige Gruppe aus drei Vorsprüngen aufweist, die in einer Richtung senkrecht zu den genannten Enden ausgerichtet sind, wobei ein Quervorsprung der genannten Gruppe unmittelbar dem einen Ende des Eckstücks benachbart angeordnet ist.

8. Satz nach einem der Ansprüche 1 bis 7, dadurch gekennzeichnet, daß an jedem Ende des Eckstücks die Fahne genau zwischen den zwei Quervorsprüngen zentriert ist.

9. Satz nach einem der Ansprüche 1 bis 8, dadurch gekennzeichnet, daß der Teilungsabstand, in dem die Löcher angeordnet sind, so groß wie die Breite des Schenkels des Profilelements (oder des Fachbodens) ist, in dem die genannten Löcher angebracht sind, und daß die gerade Reihe dieser Löcher sich in der Mittenlängsachse des genannten Schenkels erstreckt.

10. Satz nach einem der Ansprüche 1 bis 9, dadurch gekennzeichnet, daß in dem Abschnitt zwischen der Mittenfahne und jedem Quervorsprung die Eckstückplatte eine Verlängerung aufweist, die erheblich über die Quervorsprünge und die Fahne vorsteht, um eine zusätzliche Anlage der Eckstückplatte am Schenkel des Profilelements jenseits der Querlanglöcher zu bilden.

11. Gelochtes Profilelement zum Erstellen eines Satzes nach einem der Ansprüche 1 bis 10, wobei das Profilelement wenigstens einen Schenkel enthält, der eine gerade Lochreihe aufweist, die sich im wesentlichen in der Mittenlängsachse des Schenkels erstreckt und die alternierend ein Längslangloch, das sich parallel zur Mittenlängsachse erstreckt, und ein Querlangloch, das sich quer zur Mittenlängsachse erstreckt, aufweist, wobei diese Löcher in einem konstanten Teilungsabstand angeordnet sind, dadurch gekennzeichnet, daß der Teilungsabstand in dem die Löcher angeordnet sind, so groß wie die Breite des Schenkels des Profilelements ist, in dem die genannten Löcher ausgebildet sind, und daß die gerade Reihe dieser Löcher sich in der Mittenlängsachse des genannten Schenkels erstreckt.

12. Profilelement nach Anspruch 12, dadurch gekennzeichnet, daß längs jeder Lochreihe die Distanz, die ein Längslangloch und ein Querlangloch voneinander trennt, über die gesamte Länge der genannten Reihe konstant ist.

13. Profilelement nach einem der Ansprüche 11 und 12, dadurch gekennzeichnet, daß wenigstens einer seiner zwei Endabschnitte mit der Mittenquerachse eines Längslanglochs oder der Mittenquerachse eines Querlanglochs zusammenfällt.

14. Fachboden mit gelochten Saumstreifen für die Erstellung des Satzes nach einem der Ansprüche 1 bis 11 durch seine Vereinigung mit gelochten Profilelementen nach einem der Ansprüche 11 bis 13, wobei der Fachboden wenigstens einen Saumstreifen aufweist, der um 90° gegenüber der Bodenfläche abgebogen ist und eine gerade Lochreihe aufweist, die sich im wesentlichen in der Mittenlängsachse des Saumstreifens erstreckt, dadurch gekennzeichnet, daß jede Lochreihe alternierend ein Längslangloch, das sich parallel zur Mittenlängsachse erstreckt, und ein Querlangloch, das sich quer zur Mittenlängsachse erstreckt, aufweist, wobei diese Löcher in konstantem Teilungsabstand angeordnet sind.

15. Eckstück zur Erstellung des Satzes nach einem der Ansprüche 1 bis 10 durch die Vereinigung von gelochten Profilelementen nach einem der Ansprüche 11 bis 13, wobei das Eckstück aus einem flachen Eisenband besteht, dadurch gekennzeichnet, daß es an jedem seiner zwei Enden zwei ausgerichtete Quervorsprünge und eine Mittenfahne, die senkrecht zu den Quervorsprüngen angeordnet ist, aufweist, wobei die zwei Quervorsprünge und die Fahne sich im wesentlichen senkrecht zur Flachseite des Eckstücks auf derselben Seite in Bezug auf die Flachseite erstrecken, wobei die Zunge dazu dient, mit Einrichtungen für ihre Blockierung gegenüber dem Profilelement zusammenzupassen, die mit dem Abschnitt der Zunge zusammenwirken, der über das Profilelement vorsteht.

16. Eckstück für den orthogonalen Zusammenbau von zwei gelochten Profilelementen nach einem der Ansprüche 11 bis 13, wobei das Eckstück in diesem Fall insbesondere für die Verbindung der Profilelemente unter einem Verbindungswinkel oder für den Zusammenbau eines gelochten Profilelements nach einem der Ansprüche 11 bis 13 mit einem Fachboden nach Anspruch 14 bestimmt ist, dadurch gekennzeichnet, daß es aus einem flachen Eisenband gebildet ist, das an einem seiner zwei Enden zwei Querfahnen aufweist, die im wesentlichen um 90° abgebogen sind und jeweils nach vorn durch einen Finger verlängert sind, der über der Flachseite gelegen ist und von dieser eine Abstandshöhe aufweist, die gleich der Dicke des Profilelements ist, und daß es am anderen seiner zwei Enden zwei Quervorsprünge und eine Längsfahne aufweist, die im wesentlichen in der Mittenlängsachse des Eckstücks, jedoch senkrecht zu seinen Enden ausgerichtet sind, wobei die zwei Quervorsprünge und die Fahne sich senkrecht zur Flacherstreckung des Eckstücks zur gleichen Seite wie die durch die Finger verlängerten Fahnen erstrecken.

17. Eckstück zum Aneinanderstoßen von zwei Profilelementen nach einem der Ansprüche 11 bis 14, wobei das Eckstück insbesondere zur Verbindung zwischen zwei Profilelementen von U-förmigen Querschnitt an den Mittenschenkeln derselben für die Erstellung eines Kabelkanals bestimmt ist, dadurch gekennzeichnet, daß es aus einem flachen Eisenband besteht, das, im wesentlichen in seiner Mittenlängsachse ausgerichtet, zwei Gruppen aufweist, die jeweils aus zwei Quervorsprüngen und einer Längsfahne gebildet sind und jeweils dazu dienen, am Ende eines Profilelements befestigt zu werden.

18. Eckstück nach Anspruch 17, dadurch gekennzeichnet, daß für jede Gruppe die Längsfahne zwischen den zwei Quervorsprüngen zentriert ist.

## Claims

1. Assembly of perforated profiled elements for the construction of shelving and furniture, in particular of metal, the said assembly being of the type comprising perforated profiled elements only or of the type formed by such elements combined with panels having flanged edges, and at least some of the profiled elements of the said assembly being joined, to each other and/or to a panel, at least in pairs by means of gusset plates (11), the said profiled elements and the edges of the panels of this assembly being of the type of those of which at least one wing possesses a line of perforations which extends substantially along the longitudinal median axis of the said wing and which exhibits, in alternation, a perforation referred to as longitudinal, which extends parallel to the longitudinal median axis, and a perforation referred to as transversal, which extends perpendicularly to the longitudinal median axis, the said perforations being arranged at a constant pitch, and the said gusset plates of this assembly each being formed by an elongate flat iron bar (12) possessing, at each of its two ends, means for fixing it to at least one profiled element (or a panel), the said means having projections which interact with the perforations of the profiled element (or of the panel), characterised in that each gusset plate has, at least at one end, a set of three aligned projections, specifically two lateral pins (15), which interact with two transversal perforations (6) and a central lug (16) which is arranged perpendicularly to the pins and which interacts with a longitudinal perforation (5), the said two pins and the said lug extending substantially perpendicularly to the flat of the gusset plate, on the same side relative to the flat, and passing through the perforations with which they respectively interact, and in that the said lug is provided with means for locking thereof relative to the profiled element (or to the panel), which interact with the part of the lug (16) extending beyond the profiled element (or the panel).

2. Assembly according to Claim 1, characterised in that at least one of the central lugs of at least one gusset plate is pierced by a slot whose upper edge is situated above the wing of the profiled element (or above the flanged edge of the panel) and in that the means for locking the lug relative to the profiled element are formed by a tongue, preferably curved and resiliently deformable, which passes through the slot perpendicularly to the general direction of the profiled element, and whose two ends bear on the wing of the profiled element.

3. Assembly according to Claim 1, characterised in that at least one of the central lugs of at least one gusset plate is pierced by a slot whose upper edge is situated above the wing of the profiled element (or above the flanged edge of the panel) and in that the means for locking the lug relative to the profiled element are formed by a key of folded sheet metal, having an L-shaped cross-section, provided with an aperture pierced at its centre on the crest of the dihedron formed by the two wings of the key, the height of the said key being greater than the difference in level existing between the upper edge of the slot and the wing of the profiled element, the said key being fitted into the slot, causing the movement apart of its wings by resilient deformation, and then becoming locked in the said slot by the resilient movement together of its wings when its central aperture is positioned below the upper edge of the slot.

4. Assembly according to Claim 1, characterised in that at least one of the central lugs of at least one gusset plate has a base which is narrowed over a height greater than the thickness of the wing of the profiled element (or than the thickness of the flanged edge of the panel) and in that the means for locking the lug relative to the profiled element are formed by a tongue, preferably curved and resiliently deformable, which is cut out in a U-shape, the two wings of this U being slid under the apex of the lug so as to encompass the narrowed base, the core of the U and the free ends of the wings of the U bearing on the wing of the profiled element.

5. Assembly according to Claim 1, characterised in that at least one of the central lugs of at least one gusset plate has a base which is narrowed over a height very slightly greater than the thickness of the wing of the profiled element (or than the thickness of the flanged edge of the panel) and in that at least one and preferably both parts of the apex of this lug which overhang relative to the profiled element and relative to the narrowed base are curved so that the apex of the said lug has the shape of a J or an S whose free end, or two free ends respectively, bear(s) on the wing of the profiled element.

6. Assembly according to any one of Claims 1 to 5, characterised in that each of the two ends of at least one gusset plate comprises a set of three aligned projections, specifically two lateral pins and a central lug, in that the two ends of the said gusset plate are mutually perpendicular, and in that the core of the flat gusset plate extends between these two ends in a direction inclined at 45° relative to each of the said ends.

7. Assembly according to any one of Claims 1 to 5, characterised in that the two ends of at least one gusset plate are mutually parallel and in that the said gusset plate has a single set of three projections, aligned in a direction perpendicular to the said ends, one lateral pin of the said set being placed in the immediate vicinity of one end of the gusset plate.

8. Asembly according to any one of Claims 1 to 7, characterised in that, at each end of the gusset plate, the lug is precisely centred between the two lateral pins.

9. Assembly according to any one of Claims 1 to 8, characterised in that the pitch at which the perforations are arranged is equal to the width of the wing of the profiled element (or of the panel) in which the said perforations are provided, and in that the line of these perforations extends along the longitudinal median axis of the said wing.

10. Assembly according to any one of Claims 1 to 9, characterised in that, in the part situated between the central lug and each lateral pin, the flat of the gusset plate has an extension which extends substantially beyond the pins and lug to form a supplementary support for the flat of the gusset plate against the wing of the profiled element beyond the transversal perforations.

11. Perforated profiled element for the production of the assembly according to any one of Claims 1 to 10, the said profiled element being of the type whereof at least one wing possesses a line of perforations which extends substantially along the longitudinal median axis of the said wing and which exhibits, in alternation, a perforation referred to as longitudinal, which extends parallel to the longitudinal median axis, and a perforation referred to as transversal, which extends perpendicularly to the longitudinal median axis, the said perforations being arranged at a constant pitch, and being characterised in that the pitch at which the perforations are arranged is equal to the width of the wing of the profiled element in which the said perforations are provided, and in that the line of these perforations extends along the longitudinal median axis of the said wing.

12. Profiled element according to Claim 11, characterised in that, along each line of perforations, the distance separating a longitudinal perforation and a transversal perforation is constant over the entire length of the said line.

13. Profiled element according to either of Claims 11 and 12, characterised in that at least one of its two end sections is merged with the transversal median axis of a longitudinal perforation or with the transversal median axis of a transversal perforation.

14. Panel having perforated flanged edges for the production of the assembly according to any one of Claims 1 to 10 by being joined to perforated profiled elements according to any one of Claims 11 to 13, the said panel being of the type of those whereof at least one flanged edge, folded at 90° relative to the flat surface, possesses a line of perforations which extends substantially along the longitudinal median axis of the said edge, and being characterised in that each line of perforations exhibits, in alternation, a perforation referred to as longitudinal, which extends parallel to the longitudinal median axis, and a perforation referred to as transversal, which extends perpendicularly to the longitudinal median axis, the said perforations being arranged at a constant pitch.

15. Gusset plate for the production of the assembly according to any one of Claims 1 to 10, by joining perforated profiled elements in accordance with any one of Claims 11 to 13, the said gusset plate, formed by an elongate flat iron bar, being characterised in that it has, aligned at each of its two ends, two lateral pins and a central lug arranged perpendicularly to the pins, the said two pins and the said lug extending substantially perpendicularly to the flat of the gusset plate, on the same side relative to the flat, the said lug being intended to be provided with means for locking thereof relative to the profiled element, which interact with the part of the lug extending beyond the profiled element.

16. Gusset plate for assembling, orthogonally one to the other, two perforated profiled elements according to any one of Claims 11 to 13, the said gusset plate then being more specifically intended for joining profiles in an angle of the assembly, or for assembling a perforated profiled element according to any one of Claims 11 to 13 with a panel according to Claim 14, characterised in that it is formed by an elongate flat iron bar having at one of its two ends two lateral lugs, folded at substantially 90° and each extended forwards by a finger situated above the flat and distant from the said flat by a height equal to the thickness of the profiled element, and in that it has at the other of its two ends, aligned substantially along the longitudinal median axis of the said gusset plate and therefore perpendicularly to its ends, two transversal pins and a longitudinal lug, the said two pins and-the said lug extending perpendicularly to the flat of the gusset plate, on the same side as the lugs extended by the fingers.

17. Gusset plate for the butt-jointing of two profiled elements according to any one of Claims 11 to 14, the said gusset plate being more specifically intended for the connection between two profiled elements having a U-shaped cross-section, at the level of the cores thereof, for the production of a cable duct, characterised in that it is formed by an elongate flat iron bar having, aligned substantially along its longitudinal median axis, two sets each comprising two transversal pins and a longitudinal lug and each intended to be fixed at the end of a profiled element.

18. Gusset plate according to Claim 17, characteriaed in that, for each set, the longitudinal lug is centred between the two transversal pins.

FIG. 1

EP 0 311 479 B1

Fig. 2

EP 0 311 479 B1

FIG. 3

FIG. 4

FIG. 5

Fig. 6

Fig. 7

FIG. 8

FIG. 9

FIG. 10

FIG. 11

FIG. 12

FIG. 13

FIG. 14

FIG. 15